# EUROPEAN PATENT SPECIFICATION

(11) **EP 1 637 722 B1**
(45) Date of publication and mention of the grant of the patent: **27.08.2008**
(21) Application number: 05020478.3
(22) Date of filing: 20.09.2005
(51) Int. Cl.: F02D 41/22, F02B 75/22

(54) **Malfunction diagnosis apparatus for internal combustion engine**
Fehlerdiagnosevorrichtung für Brennkraftmaschine
Appareil de diagnose du fonctionnement défectueux d'un moteur à combustion interne

(30) Priority: 21.09.2004 JP 2004274035
(43) Date of publication of application: 22.03.2006
(73) Proprietor: KABUSHIKI KAISHA TOYOTA JIDOSHOKKI, Kariya-shi, Aichi-ken (JP); Toyota Jidosha Kabushiki Kaisha, Toyota-shi, Aichi-ken, 471-8571 (JP)
(72) Inventor: Narita, Yuji, Kariya-shi Aichi-ken (JP); Takahashi, Yoshiyuki, Kariya-shi Aichi-ken (JP); Imai, Takeshi, Kariya-shi Aichi-ken (JP); Suzuki, Hisanobu, Toyota-shi Aichi-ken 471-8571 (JP)
(74) Representative: TBK-Patent

(56) References cited:
- US-A- 6 092 016
- US-A1- 2004 103 880
- PATENT ABSTRACTS OF JAPAN vol. 1997, no. 09, 30 September 1997 (1997-09-30) & JP 09 137743 A (NISSAN MOTOR CO LTD), 27 May 1997 (1997-05-27)

## Description

### BACKGROUND OF THE INVENTION

The present invention relates to a malfunction diagnosis apparatus for diagnosing malfunctions in an internal combustion engine, and particularly to a malfunction diagnosis apparatus that diagnoses malfunctions in airflow control means (for example, a swirl control valve mechanism), which changes the state of gas flow in a combustion chamber.

For example, Japanese Laid-Open Patent Publication No. 9-137743 (Prior Art 1) discloses such a malfunction diagnosis apparatus. The malfunction diagnosis apparatus detects a pre-change intake air amount and a post-change intake air amount, in which the pre-change intake air amount is an intake air amount of an internal combustion engine before the apparatus sends a command for changing the operational state (opening degree) to a swirl control valve mechanism, and the post-change intake air amount is an intake air amount after the apparatus has sent the command to the swirl control valve mechanism. If the absolute value of the difference between the pre-change intake air amount and the post-change intake air amount is less than a predetermined value (a determination reference value), the malfunction diagnosis apparatus determines that the swirl control valve mechanism is not responding to the operational state changing command, and diagnoses that the swirl control valve mechanism is malfunctioning.

In recent years, to facilitate the design of internal combustion engines, commonality of structures has been sought among in-line internal combustion engines having a single bank of cylinders, V internal combustion engines having, for example, two banks of cylinders (a first cylinder bank and a second cylinder bank) arranged in the letter V (Prior Art 2). In this respect, a V engine may have two independent swirl control valve mechanisms, or a first swirl control valve mechanism provided for a first cylinder bank and a second swirl control valve mechanism provided for a second cylinder bank.

In this case, swirl control valve mechanisms for in-line engines can be applied as the first and second swirl control valve mechanisms substantially without change. The first and second control valves are independent from each other so that the operational states are separately controlled. For example, the valve bodies of the first swirl control valve mechanism and the valve bodies of the second swirl control valve mechanism are not mechanically coupled to each other, and separate actuators are provided for each set of the valve bodies. Therefore, even if one of the first swirl control valve mechanism and the second swirl control valve mechanism is malfunctioning, the other one operates normally.

However, in the combination of the malfunction diagnosis apparatus of Prior Art 1 and the V internal combustion engine of Prior Art 2, a malfunction in only one of the first swirl control valve mechanism and the second swirl control valve mechanism cannot be accurately diagnosed. This problem will now be described.

For example, when both of the first swirl control valve mechanism and the second swirl control valve mechanism malfunction, the difference of the absolute values of a pre-change intake air amount and a post-change intake air amount in the internal combustion engine is clearly (sufficiently) less than that in the case where both swirl control valve mechanisms function normally. Thus, in a case where only malfunctions in both of the first swirl control valve mechanism and the second swirl control valve mechanism need to be diagnosed, a determination reference value used for the diagnosis can be set to have a certain width. Therefore, the determination reference value can be determined in careful consideration of, for example, variations of individual internal combustion engines (for example, variations of the difference between the pre-change intake air amount and the post-change intake air amount among individual engines due to manufacturing errors), or variation due to increase and decrease of EGR gas amount (when the EGR gas amount is large, the difference between the pre-change intake air amount and the post-change intake air amount is reduced). Accordingly, it is possible to accurately diagnose that both of the first swirl control valve mechanism and the second swirl control valve mechanism are malfunctioning.

In reality, the first swirl control valve mechanism and the second swirl control valve mechanism hardly malfunction simultaneously. In most cases, one of the swirl control valve mechanisms malfunctions first. That is, to quickly detect malfunction in an internal combustion engine (swirl control valve mechanisms), it is important that malfunction in only one of the first swirl control valve mechanism and the second swirl control valve mechanism be accurately diagnosed.

However, when one of the first swirl control valve mechanism and the second swirl control valve mechanism is malfunctioning, the absolute value of the difference between the pre-change intake air amount and the post-change intake air amount is greater than that in the case where both swirl control valve mechanisms are malfunctioning. In other words, the absolute value of the difference in the case where only one of the first swirl control valve mechanism and the second swirl control valve mechanism is malfunctioning is not sufficiently less than that in the case where both swirl control valve mechanisms are operating normally. Thus, in a case where a malfunction of only one of the first swirl control valve mechanism and the second swirl control valve mechanism needs to be diagnosed, the determination reference value used for the diagnosis needs to have a relatively narrow width. A narrow width of the determination reference value causes the following drawbacks. That is, when the determination reference value is set, the influence of variations of the individual internal combustion engines cannot be eliminated in a favorable manner. Thus, a malfunction in only one of the first swirl control valve mechanism and the second swirl control valve mechanism cannot be accurately diagnosed.

That is, due to variations among individual engines, even if both of the first swirl control valve mechanism and the second swirl control valve mechanism of any of the engines function normally, the absolute value of the difference between the pre-change intake air amount and the post-change intake air amount can be less than the determination reference value in some of the engines. In such a case, it is erroneously diagnosed that only one of the first swirl control valve mechanism and the second swirl control valve mechanism is malfunctioning. Also, due to variations among individual engines, even if only one of the first swirl control valve mechanism and the second swirl control valve mechanism of any of the engines is malfunctioning, the absolute value of the difference between the pre-change intake air amount and the post-change intake air amount can exceed the determination reference value in some of the engines. In such a case, it is erroneously diagnosed that both of the first swirl control valve mechanism and the second swirl control valve mechanism are not malfunctioning.

Another type of malfunction diagnosis apparatus for swirl control valve mechanisms has been proposed (Prior Art 3). This apparatus stores a normal value of intake air amount for each operating state of an internal combustion engine. When the absolute value of the difference between the actual value of the intake air amount and the normal value is greater than or equal to a predetermined value (determination reference value), the apparatus diagnoses that the swirl control valve mechanism is malfunctioning. If the malfunction diagnosis apparatus of Prior Art 3 is applied to the V engine of Prior Art 2, the determination reference value still has insufficient width. That is, due to the variation of the individual internal combustion engines, a malfunction in only one of the first swirl control valve mechanism and the second swirl control valve mechanism cannot be accurately diagnosed.

### SUMMARY OF THE INVENTION

Accordingly, it is an objective of the present invention to provide a malfunction diagnosis apparatus that is capable of accurately diagnosing malfunction in only one of first airflow control means and second airflow control means.

To achieve the foregoing and other objectives and in accordance with the purpose of the present invention, a malfunction diagnosis apparatus for an internal combustion engine is provided. The engine includes first and second combustion chambers, first airflow control means that controls a flowing state of gas in the first combustion chamber, and second airflow control means that controls a flowing state of gas in the second combustion chamber. As an operational state of each airflow control means is changed between a first operational state and a second operational state that is different from the first operational state, the flowing state of gas in the corresponding combustion chamber is changed. The malfunction diagnosis apparatus includes first changing means, second changing means, first physical quantity detecting means, second physical quantity detecting means, and diagnosing means. The first changing means changes the operational state of the first airflow control means from one of the first operational state and the second operational state to the other while maintaining the operational state of the second airflow control means at the first operational state. The second changing means changes the operational state of the second airflow control means from one of the first operational state and the second operational state to the other while maintaining the operational state of the first airflow control means at the first operational state. After the first changing means changes the operational state of the first airflow control means, the first physical quantity detecting means detects, as a first post-change physical quantity, a first physical quantity that is related to the operational state of the first airflow control means. After the second changing means changes the operational state of the second airflow control means, the second physical quantity detecting means detects, as a second post-change physical quantity, a second physical quantity that is related to the operational state of the second airflow control means. Based on a comparison between the first post-change physical quantity and the second post-change physical quantity, the diagnosing means diagnoses that only one of the first airflow control means and the second airflow control means is malfunctioning.

The present invention provides another malfunction diagnosis apparatus for an internal combustion engine. The engine includes first and second combustion chambers, first airflow control means that controls a flowing state of gas in the first combustion chamber, and second airflow control means that controls a flowing state of gas in the second combustion chamber. As an operational state of each airflow control means is changed between a first operational state and a second operational state that is different from the first operational state, the flowing state of gas in the corresponding combustion chamber is changed. The malfunction diagnosis apparatus includes changing means, first physical quantity detecting means, second physical quantity detecting means, and diagnosing means. The changing means simultaneously changes the operational state of the first airflow control means and the operational state of the second airflow control means from the first operational state to the second operational state. After the changing means changes the operational state of the first airflow control means, the first physical quantity detecting means detects, as a first post-change physical quantity, a first physical quantity that is related to the operational state of the first airflow control means and is scarcely related to the operational state of the second airflow control means. After the changing means changes the operational state of the second airflow control means, the second physical quantity detecting means detects, as a second post-change physical quantity, a second physical quantity that is related to the operational state of the second airflow control means and is scarcely related to the operational state of the first airflow control means. Based on a comparison between the first post-change physical quantity and the second post-change physical quantity, the diagnosing means diagnoses that only one of the first airflow control means and the second airflow control means is malfunctioning.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagrammatic view showing an engine according to the present invention and the surroundings of the engine;
Fig. 2 is a time chart including sections (a) to (c), which show an example of a diagnosis process performed by a malfunction diagnosis apparatus according to a first embodiment;
Fig. 3 is a time chart including sections (a) to (c), which show an example of a diagnosis process performed by a malfunction diagnosis apparatus according to a second embodiment;
Fig. 4 is a time chart including sections (a) to (c), which show an example of a diagnosis process performed by a malfunction diagnosis apparatus according to a third embodiment; and
Fig. 5 is a time chart including sections (a) to (c), which show an example of a diagnosis process performed by a malfunction diagnosis apparatus according to a fourth embodiment.

### DETAILED DESCRIPTION OF THE PREFERRED EMBODIMENTS

Preferred embodiments of the present invention will now be described. First, a malfunction diagnosis apparatus for an internal combustion engine according to a embodiment will be described.

### First Embodiment

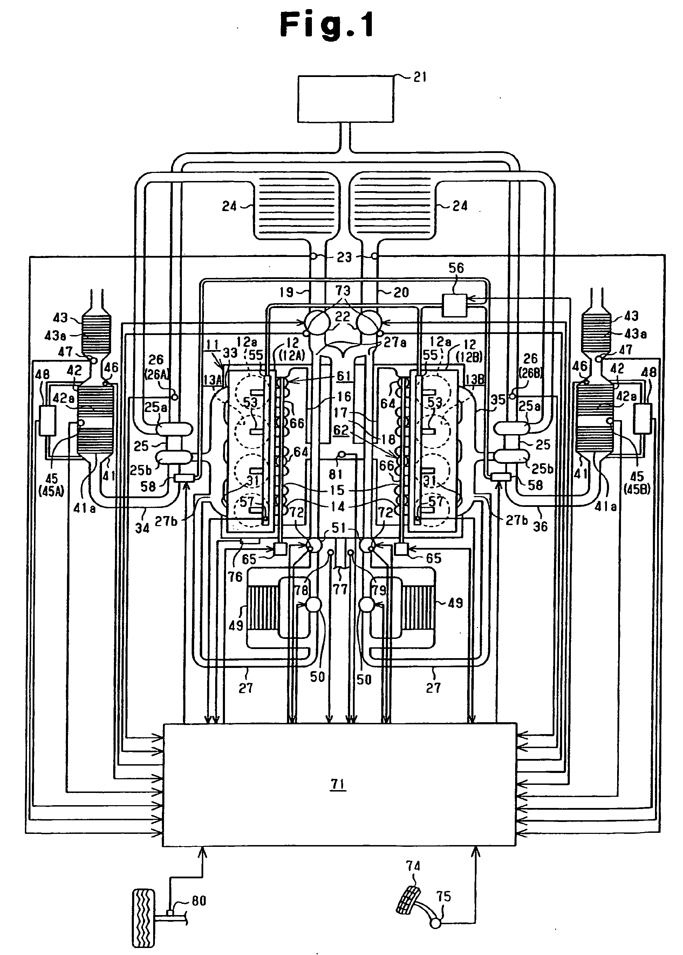

Fig. 1 is a schematic diagram illustrating a diesel engine (hereafter referred to as engine) 11 and the surroundings. The engine 11 is an internal combustion engine that functions as a drive source of a vehicle. The engine 11 has two cylinder banks 12 each having a plurality of cylinders 12a (in this embodiment, four cylinders 12a are provided for each bank 12). The two cylinder banks 12 are arranged to form the letter V. That is, the engine 11 has a V type and multiple cylinder structure (in this embodiment, eight cylinders). One of the cylinder banks 12 (the left one as viewed in the drawing) is denoted as a first cylinder bank 12A, and the other one (the right one) is denoted as a second cylinder bank 12B. The combustion chambers of cylinders 12a in the first cylinder bank 12A are each denoted as a first combustion chamber 13A, and the combustion chambers of cylinders 12a in the second cylinder bank 12B are each denoted as a second combustion chamber 13B.

A first intake port 14 and a second intake port 15 are connected to each of the first combustion chambers 13A and the second combustion chambers 13B. Each of the first and second intake ports 14, 15 is opened and closed by means of an intake valve (not shown). The first intake ports 14 and the second intake ports 15 of the first combustion chambers 13A are connected to a communication passage 18 via a first intake manifold 16. The first intake ports 14 and the second intake ports 15 of the second combustion chambers 13B are connected to the communication passage 18 via a second intake manifold 17. An intake pressure sensor 81 is located in the communication passage 18.

The communication passage 18 is connected to an air cleaner 21 via a first intake passage 19 and a second intake passage 20, which are arranged parallel to each other. In each of the first intake passage 19 and the second intake passage 20, a throttle valve 22, an intake air temperature sensor 23, an intercooler 24, a compressor portion 25a of an exhaust turbocharger 25, and an intake air amount sensor 26 are located in this order from the downstream end (the side corresponding to the communication passage 18). The intake air amount sensor 26 located in the first intake passage 19 is denoted as a first intake air amount sensor 26A, and the intake air amount sensor 26 located in the second intake passage 20 is denoted as a second intake air amount sensor 26B. A throttle opening sensor 73 is provided for each throttle valve 22. Each throttle opening sensor 73 detects the opening degree of the corresponding throttle valve 22.

Between the communication passage 18 and the throttle valve 22 in the first intake passage 19, an EGR outlet 27a of an exhaust gas recirculation (hereafter, referred to as EGR) passage 27 is opened. Between the communication passage 18 and the throttle valve 22 in the second intake passage 20, an EGR outlet 27a of an exhaust gas recirculation (hereafter, referred to as EGR) passage 27 that is different from the previous EGR passage 27 is opened.

An exhaust port 31 is connected to each of the first combustion chambers 13A and the second combustion chambers 13B. Each exhaust port 31 is opened and closed by means of an exhaust valve (not shown). The exhaust ports 31 of the first combustion chambers 13A are connected to the inlet of a turbine portion 25b of the corresponding exhaust turbocharger 25 that has the compressor portion 25a in the first intake passage 19 via a first exhaust manifold 33. An outlet of this turbine portion 25b is connected to a first exhaust passage 34. The exhaust ports 31 of the second combustion chambers 13B are connected to the inlet of a turbine portion 25b of the exhaust turbocharger 25 that has the compressor portion 25a in the second intake passage 20 via a second exhaust manifold 35. An outlet of the turbine portion 25b is connected to a second exhaust passage 36.

Three catalytic converters 41, 42, 43 are provided in each of the first exhaust passage 34 and the second exhaust passage 36. Each of the most upstream first catalytic converters 41 includes a NOx storage reduction catalyst 41a, which stores NOx and reduces stored NOx for purifying NOx. Each of the middle second catalytic converters 42 accommodates a filter 42a. A layer of NOx storage reduction catalyst is coated on the surface of the filter 42a. The second catalytic converter 42 removes NOx and particulate matter from exhaust gas. Each of the most downstream third catalyst converters 43 contains an oxidation catalyst 43a, which oxidizes HC and CO to remove them from exhaust gas.

An upstream exhaust temperature sensor 45 is located between each NOx storage reduction catalyst 41a and the corresponding filter 42a. The upstream exhaust temperature sensor 45 on the side of the first cylinder bank 12A is denoted as a first upstream exhaust temperature sensor 45A, and the upstream exhaust temperature sensor 45 on the side of the second cylinder bank 12B is denoted as a second upstream exhaust temperature sensor 45B. A downstream exhaust temperature sensor 46 and an air-fuel ratio sensor 47 are located between each filter 42a and the corresponding oxidation catalyst 43a. Each downstream exhaust temperature sensor 46 is closer to the corresponding filter 42a. Each air-fuel ratio sensor 47 is located closer to the corresponding oxidation catalyst 43a. Each air-fuel ratio sensor 47 detects an air-fuel ratio of exhaust gas based on the exhaust components. Each upstream exhaust temperature sensor 45 and each downstream exhaust temperature sensor 46 detect exhaust temperatures respectively at the corresponding positions. Pipes of a differential pressure sensor 48 are connected to a section upstream of each filter 42a and a section downstream of the filter 42a. Each differential pressure sensor 48 detects the pressure difference between the sections upstream and downstream of the corresponding filter 42a, thereby detecting the degree of clogging of the filter 42a. The degree of clogging represents the degree of accumulation of particulate matter in the filter 42a.

An EGR inlet 27b of one of the EGR passages 27 is provided in the first exhaust manifold 33. An EGR inlet 27b of the other EGR passage 27 is provided in the second exhaust manifold 35. An inlet and an outlet of an EGR cooler 49 are connected to each EGR passage 27. In a section of each EGR passage 27 that is parallel to the corresponding EGR cooler 49, a bypass valve 50 is provided. When each bypass valve 50 is closed, EGR gas passes through the corresponding EGR cooler 49 and is cooled. When each bypass valve 50 is open, EGR gas bypasses the corresponding EGR cooler 49. An EGR valve 51 is located in a section of each EGR passage 27 between the outlet of the corresponding EGR cooler 49 and the corresponding EGR outlet 27a. The opening degree of the EGR valves 51 is changed to adjust the amount of EGR gas supplied from the exhaust systems to the intake systems of the engine 11.

The first combustion chambers 13A of the first cylinder bank 12A and the second combustion chambers 13B of the second cylinder bank 12B are each provided with a fuel injection valve 53. The fuel injection valves 53 in the first combustion chambers 13A are connected to a common rail 55 provided on the first cylinder bank 12A. The fuel injection valves 53 in the second combustion chamber 13B are connected to a common rail 55 provided on the second cylinder bank 12B. A variable displacement fuel pump 56, which is electrically controlled, supplies fuel to the common rails 55. Highly pressurized fuel supplied from the fuel pump 56 to the common rails 55 is distributed to the fuel injection valves 53, and injected into the combustion chambers 13A, 13B. Each common rail 55 is provided with a fuel pressure sensor 57 for detecting the pressure of fuel.

In each of the exhaust system for the first cylinder bank 12A and the exhaust system for the second cylinder bank 12B, a fuel adding valve 58 is provided between the turbine portion 25b of the exhaust turbocharger 25 and the first catalytic converter 41. Each fuel adding valve 58 is connected the fuel pump 56. The fuel pump 56 supplies low pressure fuel to each fuel adding valve 58. Each fuel adding valve 58 injects and adds fuel to exhaust gas flowing toward the corresponding first catalytic converter 41.

First airflow control means, which is a swirl control valve mechanism 61, is provided at the intake side of the first cylinder bank 12A, and second airflow control means, which is a second swirl control valve mechanism 62, is provided at the intake side of the second cylinder bank 12B. That is, the commonality of the structure of the V-8 engine 11 and, for example, an in-line four cylinder engine is achieved. That is, the engine 11 has two independent swirl control valve mechanisms, or the first swirl control valve mechanism 61 corresponding to the first cylinder bank 12A and the second swirl control valve mechanism 62 corresponding to the second cylinder banks 12B.

Since the exhaust turbochargers 25, the intercoolers 24, the EGR passages 27, the EGR coolers 49, the throttle valves 22, the catalytic converters 41, 42, 43, a number of the pipes, and the sensors are provided for both of the first cylinder bank 12A and the second cylinder bank 12B, commonality of these components with in-line four cylinder engines is achieved. Generally, the intake and exhaust systems of the engine 11 are configured by combining two sets of the intake and exhaust systems of an in-line four cylinder engine.

Next, the configuration and operation of the first swirl control valve mechanism 61 and the second swirl control valve mechanism 62 will now be described. Since the configuration and operation of the second swirl control valve mechanism 62 are substantially the same as those of the first swirl control valve mechanism 61, the explanation thereof is omitted. Replacing "first swirl control valve mechanism 61", "the first cylinder bank 12A", and "first combustion chamber 13A" in the description below by "second swirl control valve mechanism 62", "the second cylinder bank 12B", and "second combustion chamber 13B" provides the description related to the second swirl control valve mechanism 62.

The first swirl control valve mechanism 61 includes an actuator 65 and valve bodies (butterfly valves) 64 provided for each of the first intake ports 14 in the first cylinder bank 12A. The number of the valve bodies 64 is four in this embodiment. The actuator 65 actuates (varies the degree of opening of) the valve bodies 64 between a fully open position and a fully closed position. The valve bodies 64 are coupled to one another with a rod 66, which is coupled to the actuator 65. The actuator 65 uses negative pressure (pressure lower than the atmospheric pressure) produced in the intake system as a drive source, and the operational state of the actuator 65 is externally (electrically) controlled.

When the valve bodies 64 of the first swirl control valve mechanism 61 are open, air is supplied to the first combustion chambers 13A through both of the first intake ports 14 and the second intake ports 15. Contrastingly, when the valve bodies 64 of the first swirl control valve mechanism 61 are at the fully closed position, air is supplied to each first combustion chamber 13A only through the corresponding second intake port 15, which extends along a line offset from the central axis of the cylinder 12a. Therefore, when valve bodies 64 of the first swirl control valve mechanism 61 are at the fully closed position, swirls produced in the first combustion chambers 13A are more prominent than those in a state where the valve bodies 64 are open. That is, by actuating the valve bodies 64 of the first swirl control valve mechanism 61 between the fully open position and the fully closed position, the flowing state (swirl) of gas (air) in each of the first combustion chambers 13A can be adjusted.

The electric configuration of the engine 11 will now be described.

An ECU 71 is an electronic control unit that is resemble to a computer having a CPU, a ROM, a RAM, and an input-output interface. The ECU 71 receives signals from the intake pressure sensor 81, the intake air temperature sensors 23, the first intake air amount sensor 26A, the second intake air amount sensor 26B, the upstream exhaust temperature sensors 45 (the first upstream exhaust temperature sensor 45A and the second upstream exhaust temperature sensor 45B), the downstream exhaust temperature sensors 46, the air-fuel ratio sensors 47, the differential pressure sensors 48, EGR opening degree sensors 72 in the EGR valves 51, the fuel pressure sensors 57, and the throttle opening sensor 73. Further, the ECU 71 receives signals from an acceleration pedal sensor 75 that detects the depression degree of an acceleration pedal 74, and a coolant temperature sensor 76 that detects the temperature of coolant of the engine 11. Also, the ECU 71 receives signals from an engine speed sensor 78 that detects the rotation speed of a crankshaft 77 of the engine 11, a cylinder distinguishing sensor 79 that distinguishes cylinders by detecting the rotation phase of the crankshaft 77 or the rotation phase of the intake cams, and a vehicle speed sensor 80 that detects the speed of the vehicle.

Based on the operating state of the engine 11 obtained from these signals, the ECU 71 controls the amount and the timing of fuel injection by the fuel injection valves 53. Further, based on the operating state of the engine 11 obtained from the various types of signal, the ECU 71 performs the opening degree control of the EGR valves 51, the opening control of the bypass valves 50, the opening control of the throttle valves 22, the displacement control of the fuel pump 56, the catalyst control by means of the fuel adding valves 58, the swirl control (opening control of the valve bodies 64) by means of the first swirl control valve mechanism 61 and the second swirl control valve mechanism 62.

The swirl control refers to a control in which the first swirl control valve mechanism 61 and the second swirl control valve mechanism 62 are fully closed, for example, in a low speed range of the engine 11. Accordingly, prominent swirl is produced so that fuel and air are mixed with each other in a favorable manner even in the low speed range, which stabilizes combustion and reduces smoke. The swirl control also refers to a control in which the first swirl control valve mechanism 61 and the second swirl control valve mechanism 62 are fully open, for example, in a high speed range of the engine 11. This reduces the intake resistance in the high speed range.

Further, based on the operating state of the engine obtained from the various types of signals, the ECU 71 performs a malfunction diagnosis process for the first swirl control valve mechanism 61 and the second swirl control valve mechanism 62. This process will be discussed below.

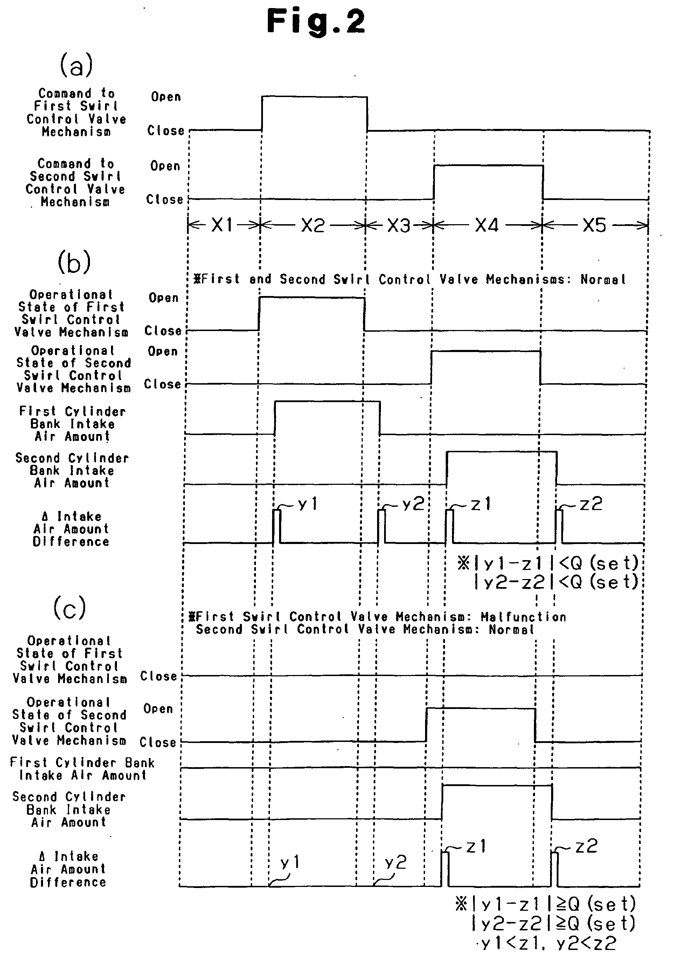

Among the processes executed by the ECU 71, a process for diagnosing whether there is a malfunction in only one of the first swirl control valve mechanism 61 and the second swirl control valve mechanism 62 (the valve bodies 64 being stuck at the fully closed position or fully open position) will now be described with reference to sections (a) to (c) of Fig. 2. This process is referred to as single bank malfunction diagnosis. This process is executed during a normal operating state of the vehicle (for example, when the vehicle is stopped and the engine 11 is idling, or when the vehicle is traveling at a constant speed) after stopping the swirl control.

As shown in the time chart of section (a) of Fig. 2, the first swirl control valve mechanism 61 and the second swirl control valve mechanism 62 are commanded to be in the fully closed state in the single bank malfunction diagnosis (period X1). Next, the second swirl control valve mechanism 62 is commanded to be in the fully closed state, and the first swirl control valve mechanism 61 is commanded to be in the fully open state (period X2). Then, the first swirl control valve mechanism 61 and the second swirl control valve mechanism 62 are commanded to be in the fully closed state (period X3). Subsequently, the first swirl control valve mechanism 61 is commanded to be in the fully closed state, and the second swirl control valve mechanism 62 is commanded to be in the fully open state (period X4). Finally, the first swirl control valve mechanism 61 and the second swirl control valve mechanism 62 are commanded to be in the fully closed state (period X3).

That is, in this process, while maintaining the operational state of the second swirl control valve mechanism 62 to the fully closed state (first operational state), the operational state of the first swirl control valve mechanism 61 is switched from one of the fully closed state and the fully open state (second operational state) to the other. Also in this process, while maintaining the operational state of the first swirl control valve mechanism 61 to the fully closed state, the operational state of the second swirl control valve mechanism 62 is switched from one of the fully closed state and the fully open state to the other. In this manner, the operational states of the first swirl control valve mechanism 61 and the second swirl control valve mechanism 62 are consecutively changed (at a certain interval) not for the sake of the swirl control, but for the sake of the malfunction diagnosis. The ECU 71 functions as changing means that changes the operational state of the swirl control valve mechanisms 61, 62.

When the first swirl control valve mechanism 61 is switched from the fully closed state to the fully open state as shown in section (b) of Fig. 2, the intake air amount of the engine 11, specifically, the intake air amount of the first cylinder bank 12A (the first combustion chambers 13A) is greatly fluctuated. The intake air amount of the first cylinder bank 12A is a physical quantity (first physical quantity) that is related to the operational state of the first swirl control valve mechanism 61 and is scarcely related to the operational state of the second swirl control valve mechanism 62. The intake air amount of the first cylinder bank 12A will hereafter be referred to as first cylinder bank intake air amount.

When the second swirl control valve mechanism 62 is switched from the fully closed state to the fully open state as shown in section (b) of Fig. 2, the intake air amount of the engine 11, specifically, the intake air amount of the second cylinder bank 12B (the second combustion chambers 13B) is greatly fluctuated. The intake air amount of the second cylinder bank 12B is a physical quantity (second physical quantity) that is related to the operational state of the second swirl control valve mechanism 62 and is scarcely related to the operational state of the first swirl control valve mechanism 61. The intake air amount of the second cylinder bank 12B will hereafter be referred to as second cylinder bank intake air amount.

As shown in Fig. 1, a section of the intake system for the first cylinder bank 12A that is downstream of the first intake air amount sensor 26A and a section of the intake system for the second cylinder bank 12B that is downstream of the second intake air amount sensor 26B are connected by the communication passage 18 so that intake air merges. Accordingly, there is no difference in the EGR supply amount between, for example, the first cylinder bank 12A and the second cylinder bank 12B. Therefore, a detected value of the first intake air amount sensor 26A does not necessarily indicate the first cylinder bank intake air amount. Likewise, a detected value of the second intake air amount sensor 26B does not necessarily indicate the second cylinder bank intake air amount.

Therefore, in this embodiment, if the operational state indicated by a command sent to the first swirl control valve mechanism 61 is the same the operational state indicated by a command sent to the second swirl control valve mechanism 62, a value equivalent to the half of the sum (total intake air amount) of a detected value of the first intake air amount sensor 26A and a detected value of the second intake air amount sensor 26B is set as the first cylinder bank intake air amount and the second cylinder bank intake air amount. Alternatively, a detected value of the first intake air amount sensor 26A may be set as the first cylinder bank intake air amount, and a detected value of the second intake air amount sensor 26B may be set as the second cylinder bank intake air amount.

When the operational state indicated by a command sent to the first swirl control valve mechanism 61 is changed from the same one as the operational state of a command sent to the second swirl control valve mechanism 62 to a different one while the operational state indicated by the command sent to the second swirl control valve mechanism 62 remains unchanged, the difference (not an absolute value) between the total intake air amount before the operational state changing commands are issued and the total intake air amount after the operational state changing commands have been issued (specifically, a total intake air amount after a predetermined period has elapsed from the operational state changing command, which period is determined in consideration of a response delay) is computed. A value obtained by adding the half of the total intake air amount before the operational state changing commands are issued to the computed difference is set as the first cylinder bank intake air amount after the operational state changing commands have issued. In this case, the second cylinder bank intake air amount is set as the half of the total intake air amount before the operational state changing commands have been issued.

Further, when the operational state indicated by a command sent to the second swirl control valve mechanism 62 is changed from the same one as the operational state of a command sent to the first swirl control valve mechanism 61 to a different one while the operational state indicated by the command sent to the first swirl control valve mechanism 61 remains unchanged, the difference (not an absolute value) between the total intake air amount before the operational state changing commands are issued and the total intake air amount after the operational state changing commands have been issued (specifically, a total intake air amount after a predetermined period has elapsed from when the operational state changing commands are issued, which period is determined in consideration of a response delay) is computed. A value obtained by adding the half of the total intake air amount before the operational state changing commands are issued to the computed difference is set as the second cylinder bank intake air amount after the operational state changing command. In this case, the first cylinder bank intake air amount is set as the half of the total intake air amount before the operational state changing commands are issued.

In this embodiment, the intake air amount sensors 26A, 26B and the ECU 71 function as physical quantity detecting means.

Further, as shown in section (b) of Fig. 2, when the first swirl control valve mechanism 61 is operating normally, i.e., when the first swirl control valve mechanism 61 responds to the operational state changing command of an upper portion of section (a) of Fig. 2, regarding each of the operational state changing commands sent to the first swirl control valve mechanism 61 (commands for switching from the fully closed state to the fully open state and commands for switching from the fully open state to the fully closed state), the difference between the first cylinder bank intake air amount before the operational state changing command is issued and the first cylinder bank intake air amount after the operational state changing command has been issued will increase. Also, when the second swirl control valve mechanism 62 is operating normally, i.e., when the second swirl control valve mechanism 62 responds to the operational state changing command of a lower portion of section (a) of Fig. 2, regarding each of the operational state changing commands sent to the second swirl control valve mechanism 62 (commands for switching from the fully closed state to the fully open state and commands for switching from the fully open state to the fully closed state), the difference between the second cylinder bank intake air amount before the operational state changing command is issued and the second cylinder bank intake air amount after the operational state changing command has been issued will increase.

Also, as shown in section (c) of Fig. 2, when the first swirl control valve mechanism 61 is malfunctioning, i.e., when the first swirl control valve mechanism 61 does not respond to the operational state changing command of an upper portion of section (a) of Fig. 2, regarding each of the operational state changing commands sent to the first swirl control valve mechanism 61 (commands for switching from the fully closed state to the fully open state and commands for switching from the fully open state to the fully closed state), the difference between the first cylinder bank intake air amount before the operational state changing command is issued and the first cylinder bank intake air amount after the operational state changing command has been issued will be reduced. Further, although not illustrated, when the second swirl control valve mechanism 62 is malfunctioning, i.e., when the second swirl control valve mechanism 62 does not respond to the operational state changing command of a lower portion of section (a) of Fig. 2, regarding each of the operational state changing commands sent to the second swirl control valve mechanism 62 (commands for switching from the fully closed state to the fully open state and commands for switching from the fully open state to the fully closed state), the difference between the second cylinder bank intake air amount before the operational state changing command is issued and the second cylinder bank intake air amount after the operational state changing command has been issued will be reduced.

In this respect, the apparatus of this embodiment monitors the amount of fluctuation of the difference between the first cylinder bank intake air amount and the second cylinder bank intake air amount per unit time in the periods X1 to X5, and stores the absolute value of the fluctuation amount (Δ intake air amount difference). Then, in the latter half of the period X5 or after the period X5, the absolute value of the difference between a Δ intake air amount difference (y1, y2) at the time when an operational state changing command to the first swirl control valve mechanism 61 is reflected on the fluctuation of the first cylinder bank intake air amount and a Δ intake air amount difference (z1, z2) at the time when an operational state changing command to the second swirl control valve mechanism 62 is reflected on the fluctuation of the second cylinder bank intake air amount is computed (for example, |y1 - z1|, ly2 - z2|). Whether there is a malfunction in only one of the first swirl control valve mechanism 61 and the second swirl control valve mechanism 62 is diagnosed by comparing the computed value and a predetermined determination reference value Q(set).

That is, as shown in section (b) of Fig. 2, if the absolute value of the difference between the Δ intake air amount difference (y1, y2) at the time when the operational state changing command to the first swirl control valve mechanism 61 is reflected on the fluctuation of the first cylinder bank intake air amount and the △ intake air amount difference (z1, z2) at the time when the operational state changing command to the second swirl control valve mechanism 62 is reflected on the fluctuation of the second cylinder bank intake air amount is less than the determination reference value Q(set) (for example, |y1 - z1| < Q(set) and |y2 - z2| < Q(set)), it is determined that the first swirl control valve mechanism 61 and the second swirl control valve mechanism 62 are both responding to the operational state changing commands. Therefore, in this case, it is not diagnosed that only one of the first swirl control valve mechanism 61 and the second swirl control valve mechanism 62 is malfunctioning.

As shown in section (c) of Fig. 2, if the △ intake air amount difference (y1, y2) at the time when the operational state changing command to the first swirl control valve mechanism 61 is reflected on the fluctuation of the first cylinder bank intake air amount is less than the Δ intake air amount difference (z1, z2) at the time when the operational state changing command to the second swirl control valve mechanism 62 is reflected on the fluctuation of the second cylinder bank intake air amount (for example, y1 < z1, y2 < z2), and the absolute value of the difference is equal to or more than the determination reference value Q(set) (for example, |y1 - z1| ≥ Q(set) and ly2 - z2| ≥ Q(set)), it is determined that the second swirl control valve mechanism 62 is responding to the operational state changing command of the lower portion of section (a) of Fig. 2, but the first swirl control valve mechanism 61 is not responding to the operational state changing command of the upper portion of section (a) of Fig. 2. Therefore, in this case, it is diagnosed that the second swirl control valve mechanism 62 is operating normally and the first swirl control valve mechanism 61 is malfunctioning.

Although not illustrated, if the △ intake air amount difference (y1, y2) at the time when an operational state changing command to the first swirl control valve mechanism 61 is reflected on the fluctuation of the first cylinder bank intake air amount is more than the △ intake air amount difference (z1, z2) at the time when the operational state changing command to the second swirl control valve mechanism 62 is reflected on the fluctuation of the second cylinder bank intake air amount (for example, y1 > z1, y2 > z2), and the absolute value of the difference is equal to or more than the determination reference value Q (set) (for example, |y1 - z1| ≥ Q(set) and |y2 - z2| ≥ Q(set)), it is determined that the first swirl control valve mechanism 61 is responding to the operational state changing command of the upper portion of section (a) of Fig. 2, but the second swirl control valve mechanism 62 is not responding to the operational state changing command of the lower portion of section (a) of Fig. 2. Therefore, in this case, it is diagnosed that the first swirl control valve mechanism 61 is operating normally and the second swirl control valve mechanism 62 is malfunctioning.

Diagnosis of the case where both of the first swirl control valve mechanism 61 and the second swirl control valve mechanism 62 are malfunctioning may be performed in the same manner as Prior Art 1 or Prior Art 3 described in the BACKGROUND OF THE INVENTION section. If the first swirl control valve mechanism 61 and the second swirl control valve mechanism 62 are both diagnosed to be malfunctioning, the single bank malfunction diagnosis is not performed thereafter.

When it is diagnosed that at least one of the first swirl control valve mechanism 61 and the second swirl control valve mechanism 62 is malfunctioning, the swirl control in the cylinder bank 12A, 12B of the malfunctioning swirl control valve mechanism 61, 62 is possibly performed unsatisfactorily, and combustion can be unstable. In this case, it is preferable that control elements that affect the combustion state, such as the fuel injection timing and the fuel injection amount be adjusted such that combustion in the cylinder bank 12A, 12B corresponding to the malfunctioning swirl control valve mechanism 61, 62 is stabilized.

Further, if a malfunction (diagnosis result) of at least one of the first swirl control valve mechanism 61 and the second swirl control valve mechanism 62 is retrieved by means of a service computer, a user or a mechanic is easily notified of the malfunction.

The malfunction diagnosis apparatus according to the above embodiment provides the following advantages
(1) The ECU 71, which functions as diagnosing means, compares the first cylinder bank intake air amount (first physical quantity) related to the operational state of the first swirl control valve mechanism 61 with the second physical quantity related to the operational state of the second swirl control valve mechanism 62, thereby diagnosing that only one of the first swirl control valve mechanism 61 and the second swirl control valve mechanism 62 is malfunctioning. That is, the operational state of the first swirl control valve mechanism 61 and the operational state of the second swirl control valve mechanism 62 are detected using the related physical quantities, respectively, and the malfunction diagnosis is performed based on the comparison of the operational states. Therefore, the influence of variations among individual engines 11 is eliminated, and malfunction of only one of the first swirl control valve mechanism 61 and the second swirl control valve mechanism 62 is accurately diagnosed.
(2) When performing the malfunction diagnosis, the operational state of the first swirl control valve mechanism 61 and the operational state of the second swirl control valve mechanism 62 are changed in the same manner at a certain interval. If the operational states of the first and second swirl control valve mechanisms 61, 62 are changed simultaneously, sensors used in other control processes of the engine 11 (for example, the fuel injection amount control) such as the first intake air amount sensor 26A and the second intake air amount sensor 26B sensor cannot be used for the malfunction diagnoses. However, since the change of the operational states is executed at an interval, these sensors can be used for the malfunction diagnosis. Therefore, it is not necessary to provide, separately from the first intake air amount sensor 26A and the second intake air amount sensor 26B, a sensor dedicated for directly detecting the first cylinder bank intake air amount and a sensor dedicated for directly detecting the second cylinder bank intake air amount. This simplifies, for example, the configuration of the engine 11.
.

From a different point of view, even if the intake system of the first cylinder bank 12A and the intake system of the second cylinder bank 12B are merged at the communication passage 18 so that there is no difference in the EGR supply amount between the first cylinder bank 12A and the second cylinder bank 12B, the intake air amount is easily used as a parameter for the malfunction diagnosis.
(3) For example, even if the first swirl control valve mechanism 61 and the second swirl control valve mechanism 62 are operating in the same operational state, the first cylinder bank intake air amount (first physical quantity) and the second cylinder bank intake air amount (second physical quantity) can be different and the difference can greatly vary among the individual engines due to variations between the first swirl control valve mechanism 61 and the second swirl control valve mechanism 62 (for example, dimensional variation) due to manufacturing errors. This hinders accurate diagnosis of malfunction.

However, the malfunction diagnosis of the present embodiment is performed by comparing the difference between the first cylinder bank intake air amount before an operational state changing command is issued (first pre-change physical quantity) and the first cylinder bank intake air amount after the operational state changing command has been issued (first post-change physical quantity) with the difference between the second cylinder bank intake air amount before an operational state changing command is issued (second pre-change physical quantity) and the second cylinder bank intake air amount after the operational state changing command has been issued (second post-change physical quantity). Therefore, the influence of variations between the first swirl control valve mechanism 61 and the second swirl control valve mechanism 62 among individual engines on the malfunction diagnosis is eliminated. Therefore, a malfunction in only one of the first swirl control valve mechanism 61 and the second swirl control valve mechanism 62 is further accurately diagnosed.

### Second Embodiment

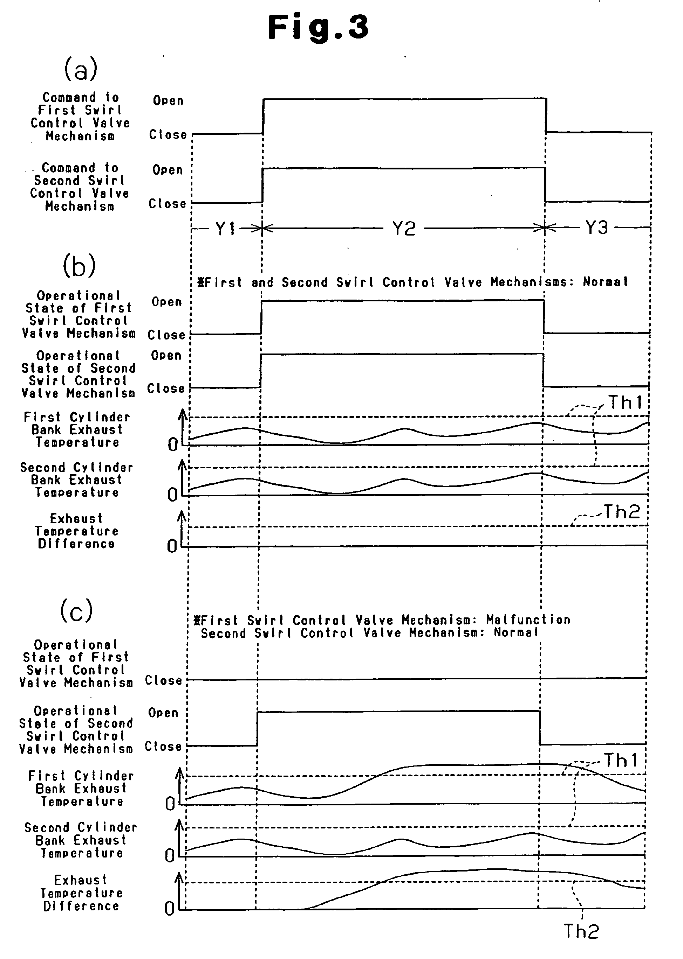

Sections (a) to (c) of Fig. 3 illustrate an operation of a malfunction diagnosis apparatus according to a second embodiment, which is a modification of the first embodiment. Only the differences from the malfunction diagnosis apparatus of the first embodiment will be discussed below.

In this embodiment, malfunction diagnosis is performed during the swirl control. The time chart of section (a) of Fig. 3 shows a stage of the swirl control, specifically a stage in which the first swirl control valve mechanism 61 and the second swirl control valve mechanism 62 are commanded to be in the fully closed state (period Y1), then the first swirl control valve mechanism 61 and the second swirl control valve mechanism 62 are commanded to be in the fully open state (period Y2), and the first swirl control valve mechanism 61 and the second swirl control valve mechanism 62 are commanded to be in the fully closed state (period Y3).

From a different point of view, in the single bank malfunction diagnosis of this embodiment, switching of the first swirl control valve mechanism 61 from a first operational state (one of the fully closed state and the fully open state) to a second operational state (the other one of the fully closed state and the fully open state) and switching of the second swirl control valve mechanism 62 from a first operational state (the one of the fully closed state and the fully open state) to a second operational state (the other one of the fully closed state and the fully open state) are executed simultaneously.

In the swirl control, if the state of the first swirl control valve mechanism 61 is in one of the fully open state and the fully closed state that is different from the instructed one, the intake air amount supplied to the first cylinder bank 12A (each first combustion chamber 13A) is different from an appropriate amount. This makes the combustion unstable or lowers the combustion efficiency. Accordingly, heat loss is increased. Thus, the temperature of gas in the exhaust system for the first cylinder bank 12A is increased. The temperature of gas in the exhaust system for the first cylinder bank 12A is a physical quantity (the first physical quantity) that is related to the operational state of the first swirl control valve mechanism 61 and is scarcely related to the operational state of the second swirl control valve mechanism 62. The gas temperature is obtained based on the detected value of the first upstream exhaust temperature sensor 45A, and is hereinafter referred to as first cylinder bank exhaust temperature.

Also, in the swirl control, if the state of the second swirl control valve mechanism 62 is in one of the fully open state and the fully closed state that is different from the instructed one, the intake air amount supplied to the second cylinder bank 12B (each second combustion chamber 13B) is different from an appropriate amount. This makes the combustion unstable or lowers the combustion efficiency. Accordingly, heat loss is increased. Thus, the temperature of gas in the exhaust system for the second cylinder bank 12B is increased. The temperature of gas in the exhaust system for the second cylinder bank 12B is a physical quantity (the second physical quantity) that is related to the operational state of the second swirl control valve mechanism 62 and is scarcely related to the operational state of the first swirl control valve mechanism 61. The gas temperature is obtained based on the detected value of the second upstream exhaust temperature sensor 45B, and is hereinafter referred to as second cylinder bank exhaust temperature.

That is, for example, as shown in section (b) of Fig. 3, if the first swirl control valve mechanism 61 and the second swirl control valve mechanism 62 are both operating normally (if the first swirl control valve mechanism 61 and the second swirl control valve mechanism 62 are responding to operational state changing commands (swirl control)), the first cylinder bank exhaust temperature and the second cylinder bank exhaust temperature do not increase after the operational state changing commands have been issued, and the absolute value of the difference between the first cylinder bank exhaust temperature and the second cylinder bank exhaust temperature absolute value (the absolute value will hereafter be referred to as exhaust temperature difference) is reduced.

Therefore, for example, when the first cylinder bank exhaust temperature and the second cylinder bank exhaust temperature are both less than a determination reference value Th1, and the exhaust temperature difference is less than a determination reference temperature Th2, it is determined that the first swirl control valve mechanism 61 and the second swirl control valve mechanism 62 are responding to the operational state changing commands of section (a) of Fig. 3. Therefore, in this case, it is not diagnosed that only one of the first swirl control valve mechanism 61 and the second swirl control valve mechanism 62 is malfunctioning.

Contrastingly, when only one of the first swirl control valve mechanism 61 and the second swirl control valve mechanism 62 is malfunctioning (when one of the first swirl control valve mechanism 61 and the second swirl control valve mechanism 62 is not responding to the operational state changing command (swirl control)), one of the first cylinder bank exhaust temperature and the second cylinder bank exhaust temperature that corresponds to the malfunctioning one of the swirl control valve mechanisms 61, 62 is possibly increased abnormally and the exhaust temperature difference is possibly increased after the operational state changing commands have been issued.

Therefore, for example, as shown in section (c) of Fig. 3, after operational state changing commands for switching from the fully closed state to the fully open state have been issued, if conditions are met that the first cylinder bank exhaust temperature is greater than or equal to the determination reference value Th1 and the second cylinder bank exhaust temperature is less than the determination reference value Th1, and that the exhaust temperature difference is greater than or equal to the determination reference value Th2, it is determined that the second swirl control valve mechanism 62 is responding to the operational state changing command and the first swirl control valve mechanism 61 is not responding to the operational state changing command. Therefore, in this case, it is diagnosed that the second swirl control valve mechanism 62 is operating normally and the first swirl control valve mechanism 61 is malfunctioning.

Although not illustrated, after operational state changing commands for switching from the fully closed state to the fully open state have been issued, if conditions are met that the first cylinder bank exhaust temperature is less than the determination reference value Th1 and the second cylinder bank exhaust temperature is greater than or equal to the determination reference value Th1, and that the exhaust temperature difference is greater than or equal to the determination reference value Th2 are met, it is determined that the first swirl control valve mechanism 61 is responding to the operational state changing command and the second swirl control valve mechanism 62 is not responding to the operational state changing command. Therefore, in this case, it is diagnosed that the first swirl control valve mechanism 61 is operating normally and the second swirl control valve mechanism 62 is malfunctioning.

After the operational state changing commands are issued in the swirl control, when the first cylinder bank exhaust temperature and the second cylinder bank exhaust temperature are both greater than or equal to the determination reference value Th1, it is determined that the first swirl control valve mechanism 61 and the second swirl control valve mechanism 62 both are not responding to the operational state changing command. Therefore, in this case, it is diagnosed that both of the first swirl control valve mechanism 61 and the second swirl control valve mechanism 62 are malfunctioning.

The malfunction diagnosis apparatus of the second embodiment provides the same advantage as the advantage (1) of the first embodiment. In addition, the malfunction diagnosis apparatus of the second embodiment provides the following advantage (4).
(4) When performing the malfunction diagnosis, the operational state of the first swirl control valve mechanism 61 and the operational state of the second swirl control valve mechanism 62 are changed simultaneously and in the same manner. Therefore, for example, when the first swirl control valve mechanism 61 and the second swirl control valve mechanism 62 are both operating normally, even if the operational state of the first swirl control valve mechanism 61 and the operational state of the second swirl control valve mechanism 62 are both changed, the combustion state of the first combustion chambers 13A and the combustion state of the second combustion chamber 13B are prevented from varying. Therefore, for example, the rotation of the engine 11 is prevented from being fluctuated due to the malfunction diagnosis. Accordingly, occupants are prevented from feeling disturbed.

### Third Embodiment

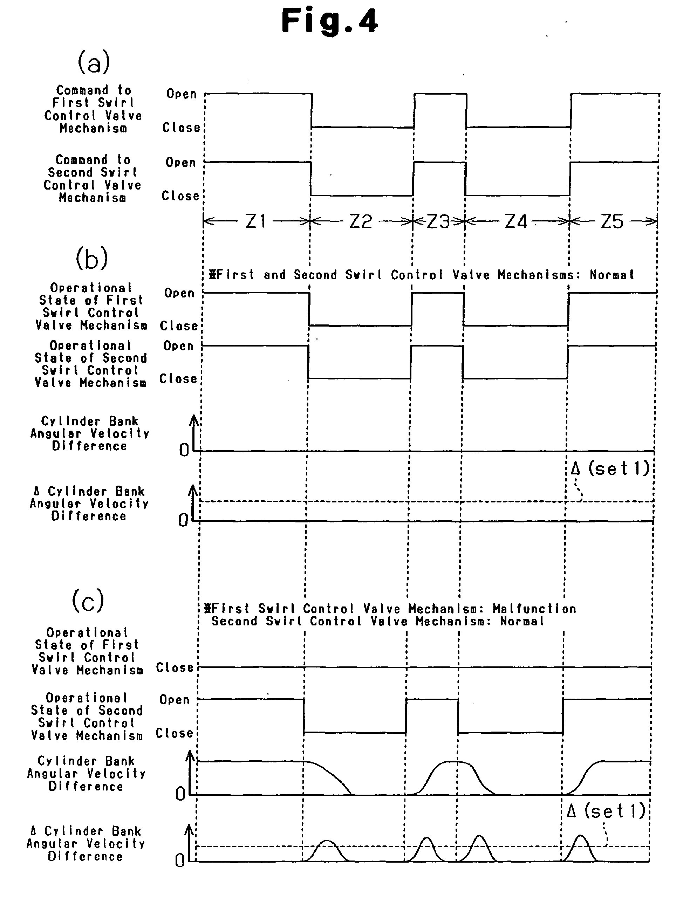

Sections (a) to (c) of Fig. 4 illustrate an operation of a malfunction diagnosis apparatus according to a third embodiment, which is a modification of the first embodiment. Only the differences from the malfunction diagnosis apparatus of the first embodiment will be discussed below.

In the single bank malfunction diagnosis (period Z1) of this embodiment, the first swirl control valve mechanism 61 and the second swirl control valve mechanism 62 are commanded to be in the fully open state as shown in the time chart of section (a) of Fig. 4. Then, the first swirl control valve mechanism 61 and the second swirl control valve mechanism 62 are commanded to be in the fully closed state (period Z2). Then, the first swirl control valve mechanism 61 and the second swirl control valve mechanism 62 are commanded to be in the fully open state (period Z3). Then, the first swirl control valve mechanism 61 and the second swirl control valve mechanism 62 are commanded to be in the fully closed state (period Z4). Finally, the first swirl control valve mechanism 61 and the second swirl control valve mechanism 62 are commanded to be in the fully open state (period Z5).

From a different point of view, in the single bank malfunction diagnosis of this embodiment, switching of the first swirl control valve mechanism 61 from a first operational state (one of the fully closed state and the fully open state) to a second operational state (the other one of the fully closed state and the fully open state) and switching of the second swirl control valve mechanism 62 from a first operational state (the one of the fully closed state and the fully open state) to a second operational state (the other one of the fully closed state and the fully open state) are executed simultaneously.

For example, if the first swirl control valve mechanism 61 is switched from the fully closed state to the fully open state or from the fully open state to the fully closed state, the intake air amount supplied to the first cylinder bank 12A (the first combustion chambers 13A) fluctuates, which causes the combustion state in the first combustion chambers 13A to fluctuate. Accordingly, the speed of the piston in each first combustion chamber 13A fluctuates in the combustion stroke. Also, time for the crankshaft 77 to rotate a certain crank angle in the combustion stroke, that is, a crank angle rotated in a certain time (the angular velocity of the crankshaft 77) fluctuates. The angular velocity of the crankshaft 77 in the combustion stroke in each first combustion chamber 13A is a physical quantity (first physical quantity) that is related to the operational state of the first swirl control valve mechanism 61 and is scarcely related to the operational state of the second swirl control valve mechanism 62. The angular velocity of the crankshaft 77 in the combustion stroke in each first combustion chamber 13A is obtained based on pulse intervals of pulse-like signal outputted by the cylinder distinguishing sensor 79, and will hereafter be referred to as first cylinder bank angular velocity.

If the second swirl control valve mechanism 62 is switched from the fully closed state to the fully open state or from the fully open state to the fully closed state, the intake air amount supplied to the second cylinder bank 12B (the second combustion chambers 13B) fluctuates, which causes the combustion state in the second combustion chambers 13B to fluctuate. Accordingly, the speed of the piston in each second combustion chamber 13B fluctuates in the combustion stroke. Also, time for the crankshaft 77 to rotate a certain crank angle in the combustion stroke, that is, a crank angle rotated in a certain time (the angular velocity of the crankshaft 77) fluctuates. The angular velocity of the crankshaft 77 in the combustion stroke in each second combustion chamber 13B is a physical quantity (second physical quantity) that is related to the operational state of the second swirl control valve mechanism 62 and is scarcely related to the operational state of the first swirl control valve mechanism 61. The angular velocity of the crankshaft 77 in the combustion stroke in each second combustion chamber 13B is obtained based on pulse intervals of pulse-like signal outputted by the cylinder distinguishing sensor 79, and will hereafter be referred to as second cylinder bank angular velocity.

Therefore, for example, as shown in section (b) of Fig. 4, if the first swirl control valve mechanism 61 and the second swirl control valve mechanism 62 are both operating normally (if the first swirl control valve mechanism 61 and the second swirl control valve mechanism 62 are responding to the operational state changing commands shown in section (a) of Fig. 4), the absolute value of the difference between the first cylinder bank angular velocity and the second cylinder bank angular velocity in periods Z1 to Z5 (this absolute value will hereafter be referred to as cylinder bank angular velocity difference) will be substantially constant (substantially zero in the drawing). Also, as shown in section (c) of Fig. 4, when the first swirl control valve mechanism 61 is malfunctioning and the second swirl control valve mechanism 62 is operating normally (if the first swirl control valve mechanism 61 is in the fully closed state and is not responding to the operational state changing commands shown in section (a) of Fig. 4, and the second swirl control valve mechanism 62 is responding to the operational state changing commands shown in section (a) of Fig. 4), switching the second swirl control valve mechanism 62 from the fully open state to the fully closed state reduces the cylinder bank angular velocity difference. Contrastingly, changing the second swirl control valve mechanism 62 from the fully closed state to the fully open state increases the cylinder bank angular velocity difference.

Accordingly, in this embodiment, the amount of fluctuation of the cylinder bank angular velocity difference per unit time in periods Z1 to Z5 is monitored. If the absolute value of the fluctuation amount (hereinafter referred to as Δ cylinder bank angular velocity difference) remains less than a determination reference value Δ(set1) as in section (b) of Fig. 4, it is not determined that only one of the first swirl control valve mechanism 61 and the second swirl control valve mechanism 62 is malfunctioning. Contrastingly, if the Δ cylinder bank angular velocity difference reaches or exceeds the determination reference value Δ (set1) as in section (c) of Fig. 4, it is determined that only one of the first swirl control valve mechanism 61 and the second swirl control valve mechanism 62 is malfunctioning.

The malfunction diagnosis apparatus of the third embodiment provides the same advantages as the advantage (1) of the first embodiment and the advantage (4) of the second embodiment. In addition, the malfunction diagnosis apparatus of the third embodiment provides the following advantage (5).
(5) In the malfunction diagnosis, the first cylinder bank angular velocity and the second cylinder bank angular velocity are used as parameters. Compared to the intake air amount and the exhaust temperature, the first cylinder bank angular velocity and the second cylinder bank angular velocity are physical quantities that quickly respond to (fluctuate in response to) changes in the operational states of the swirl control valve mechanisms 61, 62. Therefore, the malfunction diagnosis is accurately performed by eliminating the influence of, for example, disturbance (fluctuation of a factor (for example, the throttle opening degree) other than the swirl control valve mechanisms, which factor affects the first cylinder bank angular velocity and the second cylinder bank angular velocity).

### Fourth Embodiment

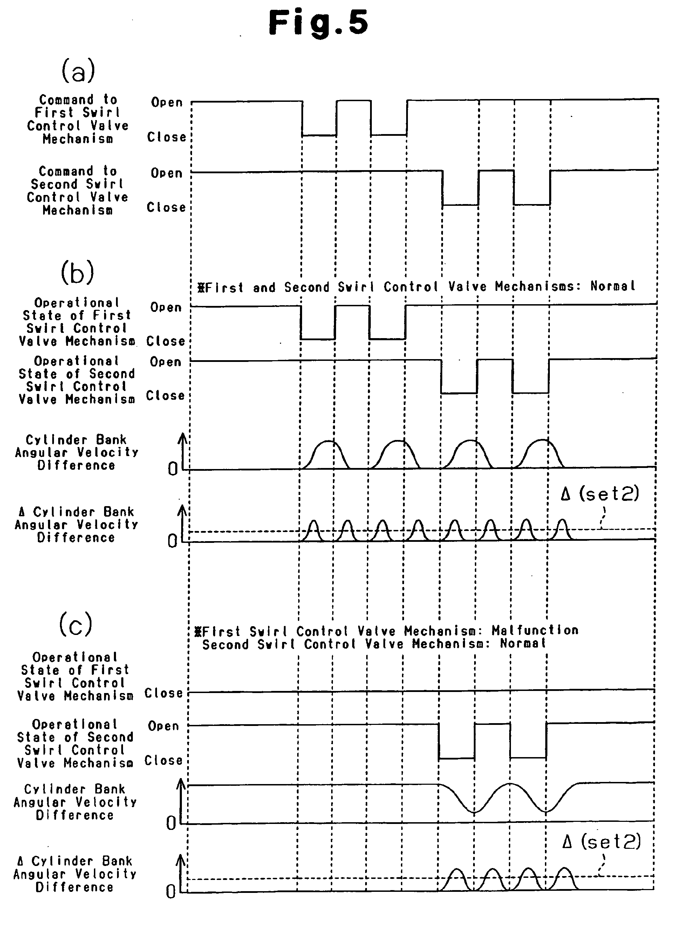

Sections (a) to (c) of Fig. 5 illustrate an operation of a malfunction diagnosis apparatus according to a fourth embodiment, which is a modification of the third embodiment. Only the differences from the malfunction diagnosis apparatus of the third embodiment will be discussed below.

In the single bank malfunction diagnosis according to this embodiment, while maintaining the operational state of the second swirl control valve mechanism 62 to the fully open state (first operational state), the operational state of the first swirl control valve mechanism 61 is switched from one of the fully open state and the fully closed state (second operational state) to the other as shown in the time chart of section (a) of Fig. 5. Also in this process, while maintaining the operational state of the first swirl control valve mechanism 61 to the fully open state, the operational state of the second swirl control valve mechanism 62 is switched from one of the fully open state and the fully closed state to the other.

As shown in section (b) of Fig. 5, if the first swirl control valve mechanism 61 and the second swirl control valve mechanism 62 are both operating normally (if the first swirl control valve mechanism 61 and the second swirl control valve mechanism 62 are responding to the operational state changing commands shown in section (a) of Fig. 5), the cylinder bank angular velocity difference is greatly fluctuated when a command for changing the operational state of the first swirl control valve mechanism 61 is issued. The cylinder bank angular velocity difference is also greatly fluctuated when a command for changing the operational state of the second swirl control valve mechanism 62 is issued. Therefore, if the Δ cylinder bank angular velocity difference becomes greater than or equal to the determination reference value Δ (set2) by issuing a command for changing the operational state of the first swirl control valve mechanism 61, and the Δ cylinder bank angular velocity difference becomes greater than or equal to the determination reference value Δ (set2) by issuing a command for changing the operational state of the second swirl control valve mechanism 62, , it is not determined that only one of the first swirl control valve mechanism 61 and the second swirl control valve mechanism 62 is malfunctioning.

Contrastingly, as shown in section (c) of Fig. 5, if the first swirl control valve mechanism 61 is malfunctioning (if the first swirl control valve mechanism 61 is not responding to the operational state changing command shown in section (a) of Fig. 5, and is in the fully closed state), the cylinder bank angular velocity difference is scarcely fluctuated when a command for changing the operational state of the first swirl control valve mechanism 61 is issued, and is greatly fluctuated only when a command for changing the operational state of the second swirl control valve mechanism 62 is issued.

Therefore, as shown in section (c) of Fig. 5, , if the Δ cylinder bank angular velocity difference remains less than the determination reference value Δ (set2) despite the fact that a command for changing the operational state of the first swirl control valve mechanism 61 is issued, , and the Δ cylinder bank angular velocity difference becomes greater than or equal to the determination reference value Δ (set2) by issuing a command for changing the operational state of the second swirl control valve mechanism 62, it is determined that the first swirl control valve mechanism 61 is malfunctioning and the second swirl control valve mechanism 62 is operating normally.

Although not illustrated, if the Δ cylinder bank angular velocity difference becomes greater than or equal to the determination reference value Δ (set2) by issuing a command for changing the operational state of the first swirl control valve mechanism 61 is issued, and the Δ cylinder bank angular velocity difference remains less than the determination reference value Δ (set2) despite the fact that a command for changing the operational state of the second swirl control valve mechanism 62 is issued, , it is determined that the first swirl control valve mechanism 61 is operating normally and the second swirl control valve mechanism 62 is malfunctioning.

The malfunction diagnosis apparatus of this embodiment provides the same advantages as the advantage (1) of the first embodiment and the advantage (5) of the third embodiment.

The malfunction diagnosis apparatuses according to the first to fourth embodiments are to be considered as illustrative and not restrictive and the invention is not to be limited to the details given herein, but may be modified within the scope and equivalence of the appended claims. For example, the apparatuses may be modified as illustrated below. Further, the modifications may be combined as long as they do not conflict with each other.

The first embodiment may be modified in such a manner that a malfunction of only one of the first swirl control valve mechanism 61 and the second swirl control valve mechanism 62 is diagnosed based on the difference between the first cylinder bank intake air amount after an operational state changing command is issued and the second cylinder bank intake air amount after the operational state changing command is issued. That is, if the absolute value of the difference is less than a determination reference value, it is not diagnosed that only one of the first swirl control valve mechanism 61 and the second swirl control valve mechanism 62 is malfunctioning. If the absolute value of the difference is greater than or equal to the determination reference value, it is determined that only one of the first swirl control valve mechanism 61 and the second swirl control valve mechanism 62 is malfunctioning.

The first embodiment may be modified to provide a first sensor dedicated for detecting the first cylinder bank intake air amount and a second sensor dedicated for detecting the second cylinder bank intake air amount. In this case, switching of the first swirl control valve mechanism 61 from a first operational state (one of the fully closed state and the fully open state) to a second operational state (the other one of the fully closed state and the fully open state) and switching of the second swirl control valve mechanism 62 from the first operational state to the second operational state may be executed simultaneously. In the engine 11 shown in Fig. 1, if the intake system for the first cylinder bank 12A and the intake system for the second cylinder bank 12B are not merged by the communication passage 18, the first intake air amount sensor 26A functions as the first sensor, and the second intake air amount sensor 26B functions as the second sensor.

In any of the first embodiment, the third embodiment, and the fourth embodiment, the number of the operational state changing commands to the first swirl control valve mechanism 61 and the second swirl control valve mechanism 62 in the single bank malfunction diagnosis is not limited to that shown in the drawings (section (a) of Fig. 2, section (a) of Fig. 4, and section (a) of Fig. 5) but may be changed as necessary.

The structure of the first swirl control valve mechanism 61 and the second swirl control valve mechanism 62 is not limited to the butterfly valve type shown in Fig. 1, but may be a structure in which a retractable blade is provided in each intake port and the projecting amount of each blade is changed to vary the flowing state of gas in the corresponding combustion chamber, or a structure in which the degree of communication between the first intake ports and the second intake ports is changed by means of valves to vary the flowing state of gas in the combustion chambers.

The present invention may be applied to a malfunction diagnosis apparatus for V engines having less than or more than eight cylinders.

The present invention may be applied to a malfunction diagnosis apparatus for multi-cylinder engines other than V engines.

The present invention may be applied to a malfunction diagnosis apparatus for gasoline engines.

The present invention may be applied to a malfunction diagnosis apparatus for internal combustion engines used for machines other than vehicles.

The amount of fluctuation of the difference between a first cylinder bank intake air amount and a second cylinder bank intake air amount per unit time is monitored, and the absolute value of the fluctuation amount (Δ intake air amount difference) is stored. The absolute value ( |y1 - z1|, |y2 - z2|) of the difference between a Δ intake air amount difference (y1, y2) at the time when an operational state changing command to a first swirl control valve mechanism is reflected on the fluctuation of the first cylinder bank intake air amount and a Δ intake air amount difference (z1, z2) at the time when an operational state changing command to a second swirl control valve mechanism is reflected on the fluctuation of the second cylinder bank intake air amount is computed. Whether there is a malfunction in only one of the first swirl control valve mechanism and the second swirl control valve mechanism is diagnosed based on a comparison between the absolute value of the computed difference and a predetermined determination reference value Q(set).

## Claims

1. A malfunction diagnosis apparatus for an internal combustion engine, the engine comprising first and second combustion chambers (13A, 13B), first airflow control means (61) that controls a flowing state of gas in the first combustion chamber (13A), and second airflow control means (62) that controls a flowing state of gas in the second combustion chamber (13B), wherein, as an operational state of each airflow control means (61, 62) is changed between a first operational state and a second operational state that is different from the first operational state, the flowing state of gas in the corresponding combustion chamber (13A, 13B) is changed, the malfunction diagnosis apparatus being
**characterized by:**
first changing means (71) that changes the operational state of the first airflow control means (61) from one of the first operational state and the second operational state to the other;
second changing means (71) that changes the operational state of the second airflow control means (62) from one of the first operational state and the second operational state to the other;
first physical quantity detecting means (26A, 26B, 71, 79) that, after the first changing means (71) changes the operational state of the first airflow control means (61), detects, as a first post-change physical quantity, a first physical quantity that is related to the operational state of the first airflow control means (61);
second physical quantity detecting means (26A, 26B, 71, 79) that, after the second changing means (71) changes the operational state of the second airflow control means (62), detects, as a second post-change physical quantity, a second physical quantity that is related to the operational state of the second airflow control means (62); and
diagnosing means (71) that, when a difference value obtained based on a comparison between the first post-change physical quantity and the second post-change physical quantity is greater than or equal to a predetermined determination reference value, diagnoses that only one of the first airflow control means (61) and the second airflow control means (62) is malfunctioning.

2. The malfunction diagnosis apparatus according to claim 1, **characterized in that** the difference value is a difference between the first post-change physical quantity and the second post-change physical quantity or a difference between a value obtained based on the first post-change physical quantity and a value obtained based on the second post-change physical quantity.

3. The malfunction diagnosis apparatus according to claim 1 or 2, **characterized in that**
the first changing means (71) changes the operational state of the first airflow control means (61) from one of the first operational state and the second operational state to the other while maintaining the operational state of the second airflow control means (62) at the first operational state, and
the second changing means (71) changes the operational state of the second airflow control means (62) from one of the first operational state and the second operational state to the other while maintaining the operational state of the first airflow control means (61) as the first operational state.

4. The malfunction diagnosis apparatus according to claim 3, **characterized by:**
third physical quantity detecting means (26A, 26B, 71) that, before the first changing means (71) changes the operational state of the first airflow control means (61), detects the first physical quantity as a first pre-change physical quantity; and
fourth physical quantity detecting means (26A, 26B, 71) that, before the second changing means (71) changes the operational state to the second airflow control means (62), detects the second physical quantity as a second pre-change physical quantity,
wherein the diagnosing means (71) computes a difference between the first pre-change physical quantity and the first post-change physical quantity, and a difference between the second pre-change physical quantity and the second post-change physical quantity, and wherein a difference between the computed two differences is greater than or equal to the determination reference value, the diagnosing means (71) diagnoses that only one of the first airflow control means (61) and the second airflow control means (62) is malfunctioning.

5. The malfunction diagnosis apparatus according to claim 1 or 2, **characterized in that**
the first and second changing means (71) simultaneously change the operational state of the first airflow control means (61) and the operational state of the second airflow control means (62) from the first operational state to the second operational state; after the first changing means (71) changes the operational state of the first airflow control means (61), the first physical quantity detecting means (45A, 79) detects, as the first post-change physical quantity, the first physical quantity that is related to the operational state of the first airflow control means (61) and is scarcely related to the operational state of the second airflow control means (62); and
after the second changing means (71) changes the operational state of the second airflow control means (62), the second physical quantity detecting means (45B, 79) detects, as the second post-change physical quantity, the second physical quantity that is related to the operational state of the second airflow control means (62) and is scarcely related to the operational state of the first airflow control means (61).

6. The malfunction diagnosis apparatus according to claim 5, **characterized by:**
third physical quantity detecting means that, before the first changing means (71) changes the operational state of the first airflow control means (61), detects the first physical quantity as a first pre-change physical quantity; and
fourth physical quantity detecting means that, before the second changing means (71) changes the operational state of the second airflow means (62), detects the second physical quantity as a second pre-change physical quantity,
wherein the diagnosing means (71) computes a difference between the first pre-change physical quantity and the first post-change physical quantity, and a difference between the second pre-change physical quantity and the second post-change physical quantity, and wherein, when a difference between the computed two differences is greater than or equal to the determination reference value, the diagnosing means (71) diagnoses that only one of the first airflow control means (61) and the second airflow control means (62) is malfunctioning.

7. The malfunctioning diagnosis apparatus according to any one of claims 1 to 6, **characterized in that** the first physical quantity is an intake air amount to the first combustion chamber (13A), and the second physical quantity is an intake air amount to the second combustion chamber (13B).

8. The malfunction diagnosis apparatus according to any one of claims 1 to 6, **characterized in that** the first physical quantity is a temperature of exhaust gas discharged from the first combustion chamber (13A), and the second physical quantity is a temperature of exhaust gas discharged from the second combustion chamber (13B).

9. The malfunction diagnosis apparatus according to any one of claims 1 to 6, the engine including a crankshaft (77), the apparatus being **characterized in that** the first physical quantity is an angular velocity of the crankshaft (77) in a combustion stroke in the first combustion chamber (13A), and the second physical quantity is an angular velocity of the crankshaft (77) in a combustion stroke in the second combustion chamber (13B).

10. The malfunction diagnosis apparatus according to any one of claims 1 to 9, **characterized in that** the first airflow control means and the second airflow control means are each a swirl control valve mechanism (61, 62).

## Patentansprüche

1. Fehlfunktionsdiagnosevorrichtung für eine Verbrennungskraftmaschine, wobei die Maschine eine erste und eine zweite Verbrennungskammer (**13A**, **13B**), eine erste Luftdurchsatzsteuerungseinrichtung (**61**), die einen Durchflusszustand von Gas in die erste Verbrennungskammer (**13A**) steuert und eine zweite Luftdurchsatzsteuerungseinrichtung (**62**), die einen Durchflusszustand von Gas in die zweite Verbrennungskammer (**13B**) steuert, aufweist, wobei, wenn ein Betriebszustand jeder der Luftdurchsatzsteuerungseinrichtungen (**61**, **62**) zwischen einem ersten Betriebszustand und einem zweiten Betriebszustand, der sich von dem ersten Betriebszustand unterscheidet, geändert wird, der Durchflusszustand von Gas in die entsprechende Verbrennungskammer (**13A**, **13B**) geändert wird, ist die Fehlfunktionsdiagnosevorrichtung **gekennzeichnet durch:**
eine erste Änderungseinrichtung (**71**), die den Betriebszustand der ersten Luftdurchsatzsteuerungseinrichtung (**61**) von dem ersten Betriebszustand oder dem zweiten Betriebszustand auf den Anderen ändert;
eine zweite Änderungseinrichtung (**71**), die den Betriebszustand der zweiten Luftdurchsatzsteuerungseinrichtung (**62**) von dem ersten Betriebszustand oder dem zweiten Betriebszustand auf den Anderen ändert;
eine erste Erfassungseinrichtung einer physikalischen Größe (**26A**, **26B**, **71**, **79**), die, nachdem die erste Änderungseinrichtung (**71**) den Betriebszustand der ersten Luftdurchsatzsteuerungseinrichtung (**61**) ändert, eine erste physikalische Größe, die sich auf den Betriebszustand der ersten Luftdurchsatzsteuerungseinrichtung (**61**) bezieht, als eine erste physikalische Nach-Änderungs-Größe erfasst;
eine zweite Erfassungseinrichtung einer physikalischen Größe (**26A**, 2**6B**, **71**, **79**), die, nachdem die zweite Änderungseinrichtung (**71**) den Betriebszustand der zweiten Luftdurchsatzsteuerungseinrichtung (**62**) ändert, eine zweite physikalische Größe, die sich auf den Betriebszustand der zweiten Luftdurchsatzsteuerungseinrichtung (**62**) bezieht, als eine zweite physikalische Nach-Änderungs-Größe erfasst; und
eine Diagnoseeinrichtung (**71**), die, wenn ein basierend auf einem Vergleich zwischen der ersten physikalischen Nach-Änderungs-Größe und der zweiten physikalischen Nach-Änderungs-Größe erhaltener Differenzwert größer oder gleich einem vorbestimmten Bestimmungsreferenzwert ist, diagnostiziert, dass nur eine der ersten Luftdurchsatzsteuerungseinrichtung (**61**) oder der zweiten Luftdurchsatzsteuerungseinrichtung (**62**) eine Fehlfunktion aufweist.

2. Fehlfunktionsdiagnosevorrichtung gemäß Anspruch 1, **dadurch gekennzeichnet, dass** der Differenzwert eine Differenz zwischen der ersten physikalischen Nach-Änderungs-Größe und der zweiten physikalischen Nach-Änderungs-Größe oder eine Differenz zwischen einem basierend auf der ersten physikalischen Nach-Änderungs-Größe erhaltenen Wert und einem basierend auf der zweiten physikalischen Nach-Änderungs-Größe erhaltenen Wert ist.

3. Fehlfunktionsdiagnosevorrichtung gemäß Anspruch 1 oder 2, **dadurch gekennzeichnet, dass**
die erste Änderungseinrichtung (**71**) den Betriebszustand der ersten Luftdurchsatzsteuerungseinrichtung (**61**) von dem ersten Betriebszustand oder dem zweiten Betriebszustand auf den Anderen ändert, während der Betriebszustand der zweiten Luftdurchsatzsteuerungseinrichtung (**62**) bei dem ersten Betriebszustand verbleibt, und
die zweite Änderungseinrichtung (**71**) den Betriebszustand der zweiten Luftdurchsatzsteuerungseinrichtung (**62**) von dem ersten Betriebszustand oder dem zweiten Betriebszustand auf den Anderen ändert, während der Betriebszustand der ersten Luftdurchsatzsteuerungseinrichtung (**61**) bei dem ersten Betriebszustand verbleibt.

4. Fehlfunktionsdiagnosevorrichtung gemäß Anspruch 3, **gekennzeichnet durch:**
eine dritte Erfassungseinrichtung einer physikalischen Größe (2**6A**, **26B**, **71**), die, bevor die erste Änderungseinrichtung (**71**) den Betriebszustand der ersten Luftdurchsatzsteuerungseinrichtung (**61**) ändert, die erste physikalische Größe als eine erste physikalische Vor-Änderungs-Größe erfasst; und
eine vierte Erfassungseinrichtung einer physikalischen Größe (**26A**, **26B**, **71**), die, bevor die zweite Änderungseinrichtung (**71**) den Betriebszustand der zweiten Luftdurchsatzsteuerungseinrichtung (**62**) ändert, die zweite physikalische Größe als eine zweite physikalische Vor-Änderungs-Größe erfasst,
wobei die Diagnoseeinrichtung (**71**) eine Differenz zwischen der ersten physikalischen Vor-Änderungs-Größe und der ersten physikalischen Nach-Änderungs-Größe, und eine Differenz zwischen der zweiten physikalischen Vor-Änderungs-Größe und der zweiten physikalischen Nach-Änderungs-Größe berechnet, und wobei, wenn eine Differenz zwischen den zwei berechneten Differenzen größer oder gleich dem Bestimmungsreferenzwert ist, die Diagnoseeinrichtung (**71**) diagnostiziert, dass nur die erste Luftdurchsatzsteuerungseinrichtung (**61**) oder die zweite Luftdurchsatzsteuerungseinrichtung (**62**) eine Fehlfunktion aufweist.

5. Fehlfunktionsdiagnosevorrichtung gemäß Anspruch 1 oder 2, **dadurch gekennzeichnet, dass**
die erste und die zweite Änderungseinrichtung (**71**) den Betriebszustand der ersten Luftdurchsatzsteuerungseinrichtung (**61**) und den Betriebszustand der zweiten Luftdurchsatzsteuerungseinrichtung (**62**) gleichzeitig von dem ersten Betriebszustand auf den zweiten Betriebszustand ändert;
nachdem die erste Änderungseinrichtung (**71**) den Betriebszustand der ersten Luftdurchsatzsteuerungseinrichtung (**61**) ändert, die erste Erfassungseinrichtung einer physikalischen Größe (**45A**, **79**) die erste physikalische Größe, die sich auf den Betriebszustand der ersten Luftdurchsatzsteuerungseinrichtung (**61**) bezieht, und sich kaum auf den Betriebszustand der zweiten Luftdurchsatzsteuerungseinrichtung (**62**) bezieht, als die erste physikalische Nach-Änderungs-Größe erfasst; und
nachdem die zweite Änderungseinrichtung (**71**) den Betriebszustand der zweiten Luftdurchsatzsteuerungseinrichtung (**62**) ändert, die zweite Erfassungseinrichtung einer physikalischen Größe (**45B**, **79**) die zweite physikalische Größe, die sich auf den Betriebszustand der zweiten Luftdurchsatzsteuerungseinrichtung (**62**) bezieht, und sich kaum auf den Betriebszustand der ersten Luftdurchsatzsteuerungseinrichtung (**61**) bezieht, als die zweite physikalische Nach-Änderungs-Größe erfasst.

6. Fehlfunktionsdiagnosevorrichtung gemäß Anspruch 5, **gekennzeichnet durch:**
eine dritte Erfassungseinrichtung einer physikalischen Größe, die, bevor die erste Änderungseinrichtung (**71**) den Betriebszustand der ersten Luftdurchsatzsteuerungseinrichtung (**61**) ändert, die erste physikalische Größe als eine erste physikalische Vor-Änderungs-Größe erfasst; und
eine vierte Erfassungseinrichtung einer physikalischen Größe, die, bevor die zweite Änderungseinrichtung (**71**) den Betriebszustand der zweiten Luftdurchsatzsteuerungseinrichtung (**62**) ändert, die zweite physikalische Größe als eine zweite physikalische Vor-Änderungs-Größe erfasst,
wobei die Diagnoseeinrichtung (**71**) eine Differenz zwischen der ersten physikalischen Vor-Änderungs-Größe und der ersten physikalischen Nach-Änderungs-Größe, und eine Differenz zwischen der zweiten physikalischen Vor-Änderungs-Größe und der zweiten physikalischen Nach-Änderungs-Größe berechnet, und wobei, wenn eine Differenz zwischen den zwei berechneten Differenzen größer oder gleich dem Bestimmungsreferenzwert ist, die Diagnoseeinrichtung (**71**) diagnostiziert, dass nur die erste Luftdurchsatzsteuerungseinrichtung (**61**) oder die zweite Luftdurchsatzsteuerungseinrichtung (**62**) eine Fehlfunktion aufweist.

7. Fehlfunktionsdiagnosevorrichtung gemäß einem der Ansprüche 1 bis 6, **dadurch gekennzeichnet, dass** die erste physikalische Größe eine Ansaugluftmenge zu der ersten Verbrennungskammer (**13A**) ist, und die zweite physikalische Größe eine Ansaugluftmenge zu der zweiten Verbrennungskammer (**13B**) ist.

8. Fehlfunktionsdiagnosevorrichtung gemäß einem der Ansprüche 1 bis 6, **dadurch gekennzeichnet, dass** die erste physikalische Größe eine Temperatur von Abgas ist, das von der ersten Verbrennungskammer (**13A**) ausgestoßen wird, und die zweite physikalische Größe eine Temperatur von Abgas ist, das von der zweiten Verbrennungskammer (**13B**) ausgestoßen wird.

9. Fehlfunktionsdiagnosevorrichtung gemäß einem der Ansprüche 1 bis 6, wobei die Maschine eine Kurbelwelle (**77**) umfasst, ist die Vorrichtung **dadurch gekennzeichnet, dass** die erste physikalische Größe eine Winkelgeschwindigkeit der Kurbelwelle (**77**) in einem Verbrennungshub in die erste Verbrennungskammer (**13A**) ist, und die zweite physikalische Größe eine Winkelgeschwindigkeit der Kurbelwelle (**77**) in einem Verbrennungshub in die zweite Verbrennungskammer (**13B**) ist.

10. Fehlfunktionsdiagnosevorrichtung gemäß einem der Ansprüche 1 bis 9, **dadurch gekennzeichnet, dass** die erste Luftdurchsatzsteuerungseinrichtung und die zweite Luftdurchsatzsteuerungseinrichtung jeweils einen Drallsteuerungsventilmechanismus (**61**, **62**) darstellen.

## Revendications

1. Appareil de diagnostic de défaillance pour un moteur à combustion interne, le moteur comprenant des première et seconde chambres de combustion (13A, 13B), un premier moyen de commande de flux d'air (61) qui commande un état d'écoulement de gaz dans la première chambre de combustion (13A), et un second moyen de commande de flux d'air (62) qui commande un état d'écoulement de gaz dans la seconde chambre de combustion (13B), où, lorsqu'un état opérationnel de chaque moyen de commande de flux d'air (61, 62) est modifié entre un premier état opérationnel et un second état opérationnel qui est différent du premier état opérationnel, l'état d'écoulement de gaz dans la chambre de combustion correspondante (13A, 13B) est modifié, l'appareil de diagnostic de défaillance étant **caractérisé par** :
un premier moyen de modification (71) qui modifie l'état opérationnel du premier moyen de commande de flux d'air (61) depuis un état parmi le premier état opérationnel et le second état opérationnel vers l'autre état ;
un second moyen de modification (71) qui modifie l'état opérationnel du second moyen de commande de flux d'air (62) depuis un état parmi le premier état opérationnel et le second état opérationnel vers l'autre état ;
un premier moyen de détection de la quantité physique (26A, 26B, 71, 79) qui, une fois que le premier moyen de modification (71) a modifié l'état opérationnel du premier moyen de commande de flux d'air (61), détecte, comme première quantité physique post-modification, une première quantité physique qui est liée à l'état opérationnel du premier moyen de commande de flux d'air (61) ;
un deuxième moyen de détection de la quantité physique (26A, 26B, 71, 79) qui, une fois que le second moyen de modification (71) a modifié l'état opérationnel du second moyen de commande de flux d'air (62), détecte, comme seconde quantité physique post-modification, une seconde quantité physique qui est liée à l'état opérationnel du second moyen de commande de flux d'air (62) ; et
un moyen de diagnostic (71) qui, lorsqu'une valeur de différence obtenue sur la base d'une comparaison entre la première quantité physique post-modification et la seconde quantité physique post-modification est supérieure ou égale à une valeur de référence de détermination prédéterminée, diagnostique qu'un seul moyen parmi le premier moyen de commande de flux d'air (61) et le second moyen de commande de flux d'air (62) est défaillant.

2. Appareil de diagnostic de défaillance selon la revendication 1, **caractérisé en ce que** la valeur de différence est une différence entre la première quantité physique post-modification et la seconde quantité physique post-modification ou une différence entre une valeur obtenue sur la base de la première quantité physique post-modification et une valeur obtenue sur la base de la seconde quantité physique post-modification.

3. Appareil de diagnostic de défaillance selon la revendication 1 ou 2, **caractérisé en ce que** le premier moyen de modification (71) modifie l'état opérationnel du premier moyen de commande de flux d'air (61) depuis un état parmi le premier état opérationnel et le second état opérationnel vers l'autre état tout en maintenant l'état opérationnel du second moyen de commande de flux d'air (62) au premier état opérationnel, et
le second moyen de modification (71) modifie l'état opérationnel du second moyen de commande de flux d'air (62) depuis un état parmi le premier état opérationnel et le second état opérationnel vers l'autre état tout en maintenant l'état opérationnel du premier moyen de commande de flux d'air (61) comme premier état opérationnel.

4. Appareil de diagnostic de défaillance selon la revendication 3, **caractérisé par** :
un troisième moyen de détection de la quantité physique (26A, 26B, 71) qui, avant que le premier moyen de modification (71) ne modifie l'état opérationnel du premier moyen de commande de flux d'air (61), détecte la première quantité physique comme première quantité physique prémodification ; et
un quatrième moyen de détection de la quantité physique (26A, 26B, 71) qui, avant que le second moyen de modification (71) ne modifie l'état opérationnel du second moyen de commande de flux d'air (62), détecte la seconde quantité physique comme seconde quantité physique prémodification,
où le moyen de diagnostic (71) calcule une différence entre la première quantité physique prémodification et la première quantité physique post-modification, et une différence entre la seconde quantité physique prémodification et la seconde quantité physique post-modification, et lorsqu'une différence entre les deux différences calculées est supérieure ou égale à la valeur de référence de détermination, le moyen de diagnostic (71) diagnostique qu'un seul moyen parmi le premier moyen de commande de flux d'air (61) et le second moyen de commande de flux d'air (62) est défaillant.

5. Appareil de diagnostic de défaillance selon la revendication 1 ou 2, **caractérisé en ce que**
les premier et second moyens de modification (71) modifient simultanément l'état opérationnel du premier moyen de commande de flux d'air (61) et l'état opérationnel du second moyen de commande de flux d'air (62) depuis le premier état opérationnel vers le second état opérationnel; une fois que le premier moyen de modification (71) a modifié l'état opérationnel du premier moyen de commande de flux d'air (61), le premier moyen de détection de la quantité physique (45A, 79) détecte, comme première quantité physique post-modification, la première quantité physique qui est liée à l'état opérationnel du premier moyen de commande de flux d'air (61) et n'est guère liée à l'état opérationnel du second moyen de commande de flux d'air (62) ; et
une fois que le second moyen de modification (71) a modifié l'état opérationnel du second moyen de commande de flux d'air (62), le deuxième moyen de détection de la quantité physique (45B, 79) détecte, comme seconde quantité physique post-modification, la seconde quantité physique qui est liée à l'état opérationnel du second moyen de commande de flux d'air (62) et n'est guère liée à l'état opérationnel du premier moyen de commande de flux d'air (61).

6. Appareil de diagnostic de défaillance selon la revendication 5, **caractérisé par**:
un troisième moyen de détection de la quantité physique qui, avant que le premier moyen de modification (71) ne modifie l'état opérationnel du premier moyen de commande de flux d'air (61), détecte la première quantité physique comme première quantité physique prémodification, et
un quatrième moyen de détection de la quantité physique qui, avant que le second moyen de modification (71) ne modifie l'état opérationnel du second moyen de commande de flux d'air (62), détecte la seconde quantité physique comme seconde quantité physique prémodification,
où le moyen de diagnostic (71) calcule une différence entre la première quantité physique prémodification et la première quantité physique post-modification, et une différence entre la seconde quantité physique prémodification et la seconde quantité physique post-modification, et où, lorsqu'une différence entre les deux différences calculées est supérieure ou égale à la valeur de référence de détermination, le moyen de diagnostic (71) diagnostique qu'un seul moyen parmi le premier moyen de commande de flux d'air (61) et le second moyen de commande de flux d'air (62) est défaillant.

7. Appareil de diagnostic de défaillance selon l'une quelconque des revendications 1 à 6, **caractérisé en ce que** la première quantité physique est une quantité d'air d'admission dans la première chambre de combustion (13A), et la seconde quantité physique est une quantité d'air d'admission dans la seconde chambre de combustion (13B).

8. Appareil de diagnostic de défaillance selon l'une quelconque des revendications 1 à 6, **caractérisé en ce que** la première quantité physique est une température de gaz d'échappement évacué depuis la première chambre de combustion (13A), et la seconde quantité physique est une température de gaz d'échappement évacué depuis la seconde chambre de combustion (13B).

9. Appareil de diagnostic de défaillance selon l'une quelconque des revendications 1 à 6, le moteur comprenant un vilebrequin (77), l'appareil étant **caractérisé en ce que** la première quantité physique est une vitesse angulaire du vilebrequin (77) dans une course de combustion dans la première chambre de combustion (13A), et la seconde quantité physique est une vitesse angulaire du vilebrequin (77) dans une course de combustion dans la seconde chambre de combustion (13B).

10. Appareil de diagnostic de défaillance selon l'une quelconque des revendications 1 à 9, **caractérisé en ce que** le premier moyen de commande de flux d'air et le second moyen de commande de flux d'air sont chacun un mécanisme de soupape de commande de tourbillon (61, 62).
